# EUROPEAN PATENT APPLICATION

(11) **EP 4 625 589 A1**
(43) Date of publication of application: **01.10.2025**
(21) Application number: 25165964.5
(22) Date of filing: 25.03.2025
(51) Int. Cl.: H01M 10/0567, H01M 10/0569, H01M 10/0525, H01M 10/42, H01M 4/525

(54) **NON-AQUEOUS ELECTROLYTE SOLUTION, LITHIUM-ION BATTERY, AND ELECTRONIC DEVICE**

(30) Priority: 29.03.2024 CN 202410381171
(71) Applicant: Ningde Amperex Technology Limited, Ningde City, Fujian Province 352100 (CN)
(72) Inventor: WANG, Kefei, Ningde City, Fujian Province 352100 (CN); ZHUANG, Ruirui, Ningde City, Fujian Province 352100 (CN)
(74) Representative: Icosa

(57) **Abstract**

A nonaqueous electrolyte solution includes a nonaqueous solvent and a lithium salt dissolved in a specific amount in the nonaqueous solvent. The nonaqueous electrolyte solution contains a specific amount of fluoroethylene carbonate, ethyl propionate, 1,2,3-tris(2-cyanoethoxy)propane, and a nitrogen-containing lithium salt. Based on a mass of the nonaqueous electrolyte solution, an aggregate mass percentage of the fluoroethylene carbonate and the 1,2,3-tris(2-cyanoethoxy)propane in the nonaqueous electrolyte solution is set to fall within a specific range. An aggregate mass percentage of the ethyl propionate and the nitrogen-containing lithium salt is set to fall within a specific range. This application can alleviate the volume resistance of a positive electrode and expansion of a negative electrode of the lithium-ion battery, and make the battery exhibit good high-temperature cycling performance and low-temperature direct-current resistance performance.

## Description

### TECHNICAL FIELD

This application relates to the field of energy storage, and in particular, to a nonaqueous electrolyte solution, a lithium-ion battery, and an electronic device.

### BACKGROUND

In recent years, information-related devices or communication devices (small devices such as personal computers and mobile phones), large devices such as power storage systems used in applications requiring a high energy density, electric vehicles, hybrid electric vehicles, auxiliary power supplies for fuel cell vehicles, and power storage equipment, as well as power storage systems used in energy-requiring applications have attracted significant attention. As one of the energy candidates for such devices, batteries with a nonaqueous electrolyte solution such as lithium-ion batteries and sodium-ion batteries have been actively developed.

Among the batteries with a nonaqueous electrolyte solution, there are many types of batteries that have been put into practical use, but the performance of the batteries are still not satisfactory in various applications. In particular, for use in vehicles such as electric vehicles, relatively high input performance of direct-current resistance of the battery are still required even in cold seasons. Therefore, it is important to improve low-temperature performance. When the battery is repeatedly charged and discharged in a high-temperature environment, the increase in the internal resistance of the battery needs to be kept at a low level to improve the high-temperature cycling performance of the lithium-ion battery.

To improve the low-temperature performance and charge-and-discharge performance (cycling performance) of the batteries with a nonaqueous electrolyte solution, research has long focused on the optimization of various battery components, primarily the active materials of the positive electrode and the negative electrode. Similarly, technologies related to nonaqueous electrolyte solutions are also developing, and it has been put forward that various additives are used to suppress the deterioration caused by the decomposition of the nonaqueous electrolyte solutions on the surfaces of the active materials of the positive and negative electrodes.

### SUMMARY

### Problems to be solved hereby

In a battery that uses a nonaqueous electrolyte solution as disclosed in the prior art, the durability of the battery at high temperature and the direct-current resistance performance of the battery at low temperature are not satisfactory concurrently, and still need to be improved.

### Technical solutions to the problems

The applicant hereof has investigated the above problem deeply and discloses a nonaqueous electrolyte solution for use in a lithium-ion battery, that is, a nonaqueous electrolyte solution in which a lithium salt is dissolved in a nonaqueous solvent. The nonaqueous electrolyte solution contains a specific amount of fluoroethylene carbonate, ethyl propionate, 1,2,3-tris(2-cyanoethoxy)propane, and a nitrogen-containing lithium salt. The aggregate mass percentage of the fluoroethylene carbonate and the 1,2,3-tris(2-cyanoethoxy)propane in the nonaqueous electrolyte solution is set to fall within a specific range. The aggregate mass percentage of the ethyl propionate and the nitrogen-containing lithium salt is set to fall within a specific range. The nonaqueous electrolyte solution put into use not only alleviates the volume resistance of the positive electrode and the expansion of the negative electrode of the lithium-ion battery, but also enables the battery to well exert high-temperature cycling performance and low-temperature direct-current resistance performance in a balanced way, thereby achieving the objectives of this application.

To be specific, this application provides the following (1) to (3): (1) A nonaqueous electrolyte solution for use in a lithium-ion battery, including a nonaqueous solvent and a lithium salt, where, based on a total mass of the nonaqueous electrolyte solution, the nonaqueous electrolyte solution contains:
(I) fluoroethylene carbonate at a mass percentage of 2.1 wt% to 9 wt%;
(II) ethyl propionate at a mass percentage of 5 wt% to 35 wt%;
(III) 1,2,3-tris(2-cyanoethoxy)propane at a mass percentage of 0.7 wt% to 5 wt%; and
(IV) a nitrogen-containing lithium salt at a mass percentage of 0.01 wt% to 5 wt%, where

The aggregate mass percentage of (I) and (III) is 4.6 wt% to 11.2 wt%, and the aggregate mass percentage of (II) and (IV) is 5.5 wt% to 36.5 wt%.

(2) A lithium-ion battery, including a positive electrode, a negative electrode, and a nonaqueous electrolyte solution in which an electrolyte salt is dissolved in a nonaqueous solvent, where the nonaqueous electrolyte solution is the above nonaqueous electrolyte solution; the positive electrode includes lithium cobalt oxide containing at least three of elements aluminum, magnesium, titanium, zirconium, lanthanum, iridium, cerium, or tungsten; and/or, the negative electrode includes a negative active material, and the negative active material is at least 1 selected from lithium metal, a lithium alloy, a lithiation- and delithiation-enabled carbon material, elemental tin, a tin compound, elemental silicon, a silicon oxygen compound, a silicon carbon compound, or a lithium titanium oxide compound.

(3) An electronic device, where the electronic device includes the above lithium-ion battery.

### Beneficial effects

The nonaqueous electrolyte solution put into use not only alleviates the volume resistance of the positive electrode and the expansion of the negative electrode of the lithium-ion battery, but also enables the battery to well exert high-temperature cycling performance and low-temperature direct-current resistance performance in a balanced way.

### DETAILED DESCRIPTION

Some embodiments of this application will be described in detail below. No embodiment of this application is to be construed as a limitation on this application. Unless otherwise expressly specified, the following terms used herein convey the meanings defined below.

### Nonaqueous electrolyte solution

This application provides a nonaqueous electrolyte solution for use in a lithium-ion battery, in which a lithium salt is dissolved in a nonaqueous solvent. Based on the total mass of the nonaqueous electrolyte solution, the nonaqueous electrolyte solution contains:
(I) fluoroethylene carbonate at a mass percentage of 2.1 wt% to 9 wt%;
(II) ethyl propionate at a mass percentage of 5 wt% to 35 wt%;
(III) 1,2,3-tris(2-cyanoethoxy)propane at a mass percentage of 0.7 wt% to 5 wt%; and
(IV) a nitrogen-containing lithium salt at a mass percentage of 0.01 wt% to 5 wt%, where

The aggregate mass percentage of (I) and (III) is 4.6 wt% to 11.2 wt%, and the aggregate mass percentage of (II) and (IV) is 5.5 wt% to 36.5 wt%. The nonaqueous electrolyte solution contains: (I) fluoroethylene carbonate, (II) ethyl propionate, (III) 1,2,3-tris(2-cyanoethoxy)propane, and (IV) a nitrogen-containing lithium salt. Especially, the aggregate mass percentage of the fluoroethylene carbonate and the 1,2,3-tris(2-cyanoethoxy)propane in the nonaqueous electrolyte solution is set to fall within a specific range. The aggregate mass percentage of the ethyl propionate and the nitrogen-containing lithium salt is set to fall within a specific range. Although the reason for improving the resistance performance after high-temperature cycling and the low-temperature direct-current resistance performance of the lithium-ion battery remains unclear, it is believed that the constituents of (I) to (IV) react with the active species on the surface of the positive electrode during charging in the 1^{st} cycle, and a stable coating is formed on the surface of the positive electrode. It is speculated that the coating layer suppresses the detachment of oxygen from the positive electrode structure, reduces the transition metal-oxygen species formed on the surface of the positive electrode and the precipitation of the transition metal on the surface of the negative electrode. As a result, by suppressing the increase in resistance on the electrode interface, this application not only improves the resistance performance after high-temperature cycling, but also improves the low-temperature direct-current resistance performance, and suppresses the expansion of the negative electrode.

Especially, (IV) includes at least one of LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, cyclic lithium 1,2-perfluoroethane(disulfonyl)imide, cyclic lithium 1,3-perfluoropropane(disulfonyl)imide, LiN(CF₃SO₂)(C₄F₉SO₂), 4,5-dicyano-2-trifluoromethylimidazole lithium salt, 4,5-dicyano-2-pentafluoroethylimidazole lithium salt, 2,4,5-tricyanoimidazole lithium salt, 5,6-dicyano-2-trifluoromethylbenzimidazole lithium salt, 5,6-dicyano-2-pentafluoroethylbenzimidazole lithium salt, 2,5,6-tricyanobenzimidazole lithium salt, 4,7-dicyano-2-trifluoromethylbenzimidazole lithium salt, 4,7-dicyano-2-pentafluoroethylbenzimidazole lithium salt, 2,4,7-tricyanobenzimidazole lithium salt, 4,5,6,7-tetracyano-2-trifluoromethylbenzimidazole lithium salt, 4,5,6,7-tetracyano-2-pentafluoroethylbenzimidazole lithium salt, or 2,4,5,6,7-pentacyanobenzimidazole lithium salt. Due to the excellent stability of the resultant coating, the battery performance is further improved. There may be 1 type or at least 2 types of (IV) nitrogen-containing lithium salts.

Specifically, with a view to improving the resistance performance after high-temperature cycling of the lithium-ion battery, based on the total mass of the nonaqueous electrolyte solution, the mass percentage of the fluoroethylene carbonate is at least 2.5 wt%. Preferably, the mass percentage of the fluoroethylene carbonate is at least 3.2 wt%, preferably at least 4.3 wt%, and more preferably at least 5.1 wt%.

In addition, as an upper limit of the mass percentage of the fluoroethylene carbonate, with a view to reducing the volume resistance of the positive electrode, the mass percentage of the fluoroethylene carbonate is at most 9 wt%, preferably at most 8.7 wt%, more preferably at most 7.5 wt%, further preferably at most 7.2 wt%, and extraordinarily preferably at most 6.7 wt%.

In some embodiments, the mass percentage of the fluoroethylene carbonate is set to a1 wt%, where a1 is 2.1, 2.5, 3.2, 3.5, 4, 4.3, 5.1, 5.5, 6, 6.1, 6.7, 7, 7.2, 7.5, 8.7, 9, or a value falling within a range formed by any two thereof. For example, the range is 2.1 to 8.7, 2.5 to 8.7, 3.2 to 7.5, 4.3 to 7.2, 3.2 to 5.5, 3.5 to 8.7, 5.5 to 9, 6 to 9, 7 to 9, 2.1 to 3.5, 2.5 to 4.3, or 2.3 to 5.5. When the mass percentage falls within the above range, the volume resistance of the positive electrode is further alleviated, and the low-temperature direct-current resistance performance of the lithium-ion battery are improved.

Specifically, with a view to alleviating the low-temperature direct-current resistance of the lithium-ion battery, based on the total mass of the nonaqueous electrolyte solution, the mass percentage of the 1,2,3-tris(2-cyanoethoxy)propane is at least 0.7 wt%, preferably at least 0.8 wt%, and more preferably at least 1.2 wt%.

In addition, as an upper limit of the mass percentage of the 1,2,3-tris(2-cyanoethoxy)propane, with a view to reducing the volume resistance of the positive electrode, the mass percentage of the 1,2,3-tris(2-cyanoethoxy)propane is at most 5 wt%, preferably at most 4.9 wt%, more preferably at most 4.1 wt%, further preferably at most 3.6 wt%, and extraordinarily preferably at most 2.7 wt%.

In some embodiments, the mass percentage of the 1,2,3-tris(2-cyanoethoxy)propane is set to a3 wt%, where a3 is 0.7, 0.8, 0.9, 1, 1.2, 1.5, 1.6, 2, 2.1, 2.5, 2.7, 3, 3.5, 3.6, 4.1, 4.9, 5, or a value falling within a range formed by any two thereof. The mass percentage falling within the above range further alleviates the low-temperature direct-current resistance.

Further, with a view to reducing the volume resistance of the positive electrode, the aggregate mass percentage of the fluoroethylene carbonate and the 1,2,3-tris(2-cyanoethoxy)propane is at least 4.6 wt%, and preferably at least 5 wt% based on the total mass of the nonaqueous electrolyte solution.

Moreover, as an upper limit of the aggregate mass percentage of the fluoroethylene carbonate and the 1,2,3-tris(2-cyanoethoxy)propane, with a view to improving the electrochemical performance in a low-temperature environment, the aggregate mass percentage is at most 11.2 wt%, and preferably at most 10 wt%.

In some embodiments, the aggregate mass percentage of the fluoroethylene carbonate and the 1,2,3-tris(2-cyanoethoxy)propane is set to (a1+a3) wt%, where (a1+a3) is 4.6, 5, 5.7, 6, 6.8, 7.6, 8, 8.3, 8.6, 9.2, 9.7, 10, 10.5, 11.2, or a value falling within a range formed by any two thereof. The aggregate mass percentage falling within the above range further improves the electrochemical performance in a high-temperature environment.

Specifically, with a view to alleviating the low-temperature direct-current resistance of the lithium-ion battery, based on the total mass of the nonaqueous electrolyte solution, the mass percentage of the ethyl propionate is at least 5 wt%, preferably at least 8.5 wt%, and more preferably at least 10.8 wt%.

In addition, as an upper limit of the mass percentage of the ethyl propionate, with a view to suppressing the expansion of the negative electrode, the mass percentage of the ethyl propionate is at most 35 wt%, preferably at most 34 wt%, more preferably at most 33.6 wt%, further preferably at most 31.2 wt%, and extraordinarily preferably at most 26.9 wt%.

In some embodiments, the mass percentage of the ethyl propionate is set to a2 wt%, where a2 is 5, 8.5, 9, 10, 10.5, 10.8, 11, 12, 13.9, 14, 15, 16.7, 17, 18, 19, 20, 21, 22.3, 26.9, 31.2, 33.6, 34, 35, or a value falling within a range formed by any two thereof. The mass percentage falling within the above range further alleviates the low-temperature direct-current resistance.

Specifically, with a view to improving the resistance performance after high-temperature cycling of the lithium-ion battery, based on the total mass of the nonaqueous electrolyte solution, the mass percentage of the nitrogen-containing lithium salt is at least 0.01 wt%. Preferably, the mass percentage of the nitrogen-containing lithium salt is at least 0.03 wt%, preferably at least 0.07 wt%, and more preferably at least 0.12 wt%.

In addition, as an upper limit of the mass percentage of the nitrogen-containing lithium salt, with a view to suppressing the expansion of the negative electrode, the mass percentage of the nitrogen-containing lithium salt is at most 5 wt%, preferably at most 4.6 wt%, more preferably at most 3.5 wt%, further preferably at most 2.1 wt%, and extraordinarily preferably at most 1.2 wt%.

In some embodiments, the mass percentage of the nitrogen-containing lithium salt is set to a4 wt%, where a4 is 0.01, 0.03, 0.05, 0.07, 0.08, 0.1, 0.12, 0.15, 0.19, 0.21, 0.27, 0.3, 0.35, 0.4, 0.45, 0.51, 0.6, 0.7, 0.79, 0.9, 1, 1.2, 1.5, 1.8, 2, 2.5, 3.5, 4.6, 5, or a value falling within a range formed by any two thereof. The mass percentage falling within the above range further improves the resistance performance after high-temperature cycling.

Further, with a view to suppressing the expansion of the negative electrode, based on the total mass of the nonaqueous electrolyte solution, the aggregate mass percentage of the ethyl propionate and the nitrogen-containing lithium salt is at least 5.5 wt%, and preferably at least 9 wt%.

Moreover, as an upper limit of the aggregate mass percentage of the ethyl propionate and the nitrogen-containing lithium salt, with a view to improving the electrochemical performance in a low-temperature environment, the aggregate mass percentage is at most 36.5 wt% such as at most 35.5 wt%, and preferably at most 34.5 wt%.

In some embodiments, the aggregate mass percentage of the ethyl propionate and the nitrogen-containing lithium salt is set to (a2+a4) wt%, where a2+a4 is 5.5, 7, 9, 11.3, 12, 14.4, 15, 17.2, 18, 20, 22.8, 27.4, 28.5, 31.7, 34.1, 34.5, 35.5, 36.5, or a value falling within a range formed by any two thereof. The aggregate mass percentage falling within the above range further alleviates the expansion of the negative electrode.

In addition, the nonaqueous electrolyte solution may further include other nitrile compounds. The applicant hereof has also unexpectedly discovered that other nitrile compounds can reduce the impedance of the coating formed by the reaction between the above-mentioned substances (I) to (IV) and the active species on the surface of the positive electrode, facilitate the charge transfer of lithium ions, and improve the low-temperature direct-current resistance performance.

The other nitrile compounds include at least one of succinonitrile, adiponitrile, ethylene glycol bis(propionitrile)ether, 1,3,5-pentanetricarbonitrile, 1,2,3-propanetricarbonitrile, 1,3,6-hexanetricarbonitrile, 1,2,6-hexanetricarbonitrile, 1,2,4-tris(2-cyanoethoxy)butane, 1,1,1-tris(cyanoethoxymethylene)ethane, 1,1,1-tris(cyanoethoxymethylene)propane, 3-methyl 1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

There may be 1 type or at least 2 types of other nitrile compounds. For example, other nitrile compounds include succinonitrile and adiponitrile; or succinonitrile and ethylene glycol bis(propionitrile)ether; or adiponitrile and ethylene glycol bis(propionitrile)ether; or succinonitrile and 1,3,6-hexanetricarbonitrile; or adiponitrile and 1,3,6-hexanetricarbonitrile; or ethylene glycol bis(propionitrile)ether and 1,3,6-hexanetricarbonitrile.

Specifically, with a view to improving the low-temperature direct-current resistance performance, based on the total mass of the nonaqueous electrolyte solution, the mass percentage of other nitrile compounds is at least 0.3 wt%. Preferably, the mass percentage of other nitrile compounds is at least 0.6 wt%, preferably at least 0.9 wt%, and more preferably at least 1.4 wt%.

In addition, as an upper limit of the mass percentage of other nitrile compounds, with a view to suppressing the expansion of the negative electrode, the mass percentage of other nitrile compounds is at most 8 wt%, preferably at most 7.9 wt%, more preferably at most 7.1 wt%, further preferably at most 6.2 wt%, and extraordinarily preferably at most 5.3 wt%.

In some embodiments, the total mass percentage of other nitrile compounds is b wt%, where b is 0.3, 0.35, 0.4, 0.45, 0.5, 0.6, 0.7, 0.8, 0.9, 1, 1.4, 1.5, 2, 2.5, 3, 3.5, 3.9, 4, 4.6, 5.3, 6.2, 7.1, 7.9, 8, or a value falling within a range formed by any two thereof. The total mass percentage falling within the above range further alleviates the expansion of the negative electrode.

In addition, the nonaqueous electrolyte solution may further include a first substance. The applicant hereof has also unexpectedly discovered that the first substance can suppress the decomposition of the above-mentioned coating during charging and discharging, thereby further improving the low-temperature direct-current resistance performance.

The first substance includes at least one of vinylene carbonate, lithium difluorophosphate, lithium fluorosulfonate, 1,3-propane sultone, 1,3-propene sultone, ethylene sulfate, 1,3-propylene glycol cyclosulfate, fluorobenzene, cyclohexylbenzene, biphenyl, tris(trimethylsilyl)phosphate, or tris(trimethylsilyl)borate.

There may be 1 type or at least 2 types of the first substance. For example, the first substance includes lithium difluorophosphate and lithium fluorosulfonate; or lithium difluorophosphate and ethylene sulfate; or lithium difluorophosphate and 1,3-propane sultone; or lithium fluorosulfonate and 1,3-propene sultone; or ethylene sulfate and 1,3-propane sultone; or tris(trimethylsilyl)phosphate and lithium difluorophosphate; or tris(trimethylsilyl)borate and lithium difluorophosphate.

Specifically, with a view to improving the low-temperature direct-current resistance performance, based on the total mass of the nonaqueous electrolyte solution, the mass percentage of the first substance is at least 0.3 wt%. Preferably, the mass percentage of the first substance is at least 0.9 wt%, preferably at least 1.6 wt%, and more preferably at least 2.8 wt%.

In addition, as an upper limit of the mass percentage of the first substance, with a view to suppressing the expansion of the negative electrode, the mass percentage of the first substance is at most 10 wt%, preferably at most 9.7 wt%, more preferably at most 8.2 wt%, further preferably at most 7.1 wt%, and extraordinarily preferably at most 6.7 wt%.

In some embodiments, the total mass percentage of the first substance is c wt%, where c is 0.3, 0.35, 0.4, 0.45, 0.5, 0.6, 0.7, 0.8, 0.9, 1, 1.5, 1.6, 2, 2.5, 2.8, 3, 3.5, 3.9, 4, 4.5, 5, 5.5, 6, 6.5, 7.1, 7.5, 8.2, 8.6, 9, 9.3, 9.7, 10, or a value falling within a range formed by any two thereof. The total mass percentage falling within the above range further improves the low-temperature direct-current resistance performance.

The lithium salt used in the nonaqueous electrolyte solution of this application includes lithium hexafluorophosphate. Based on the total mass of the nonaqueous electrolyte solution, the mass percentage of the lithium hexafluorophosphate is 9 to 15 wt%, preferably 9 to 13 wt%, and more preferably 9 to 12 wt%. With the mass percentage falling within the above range, the resistance performance after high-temperature cycling can be exerted and the low-temperature direct-current resistance performance can be improved in a more balanced manner.

The nonaqueous electrolyte solution of this application may further include a nonaqueous solvent known in the prior art for use as a solvent of a nonaqueous electrolyte solution. For example, the nonaqueous solvent is cyclic carbonate ester, chain carbonate ester, cyclic carboxylate, chain carboxylate, cyclic ether, chain ether, a phosphorus-containing organic solvent, or a sulfur-containing organic solvent. Preferably, the nonaqueous solvent is chain carboxylate ester such as ethyl acetate, ethyl fluoroacetate, or propyl propionate.

### Lithium-ion battery

The lithium-ion battery of this application includes a positive electrode, a negative electrode, and the above-mentioned nonaqueous electrolyte solution in which a lithium salt is dissolved in a nonaqueous solvent. The components such as the positive electrode and the negative electrode other than the nonaqueous electrolyte solution may be used without particular limitation.

For example, the positive active material used in the lithium-ion battery may be a composite metal oxide that is compounded by lithium and 1 or at least 2 of cobalt, manganese, or nickel, or may be a lithium-containing olivine phosphate salt containing one or at least two of iron, cobalt, or manganese. 1 of such positive active materials may be used alone, or at least 2 thereof may be used in combination.

Examples of such lithium composite metal oxides may be, as appropriate, at least 1 of, and more preferably at least 2 of: LiCoO₂, LiMn₂O₄, LiNiO₂, LiCo₁₋ₓNiₓO₂ (0.01 < x < 1), LiNiₓMn_{y}Co_{z}O₂ (x + y + z = 1), a solid solution of Li₂MnO₃ and LiMO₂ (M is a transition metal such as Co, Ni, Mn, or Fe), LiNi_{1/2}Mn_{3/2}O₄, LiFePO₄, LiMnPO₄, and LiMn₁₋ₓFeₓPO₄ (0.01 < x < 1). A part of the lithium composite metal oxides or lithium-containing olivine phosphate salts may be substituted by other elements; or, a part of the cobalt, nickel, manganese, or iron in the positive active material may be substituted by one or at least two of the elements Co, Mn, Ni, Mg, Al, B, Ti, V, Nb, Cu, Zn, Mo, Ca, Sr, W, and Zr; or, the positive active material may be coated with a compound containing such other elements or coated with a carbon material.

For example, the positive electrode includes lithium cobalt oxide containing at least three of aluminum, magnesium, titanium, zirconium, lanthanum, iridium, cerium, or tungsten. With a view to improving the resistance performance after high-temperature cycling of the lithium-ion battery, based on the mass of the lithium cobalt oxide, the mass percentage of any one of the above elements is preferably at least 0.01 wt%, preferably at least 0.03 wt%, and more preferably at least 0.05 wt%. In addition, as an upper limit of the mass percentage of the elements, the mass percentage of any one of the elements is at most 1 wt%, preferably at most 0.5 wt%, more preferably at most 0.3 wt%, further preferably at most 0.15 wt%, and extraordinarily preferably at most 0.1 wt%.

If a lithium composite metal oxide that operates at a high charge voltage is used, the electrochemical performance tend to deteriorate in a high-temperature environment due to a reaction with the nonaqueous electrolyte solution during charging. However, in the lithium-ion battery disclosed in this application, the deterioration of the electrochemical performance can be suppressed.

With a view to increasing the voltage during charging, the positive electrode potential is preferably 4.4 V (vs Li/Li⁺) or higher, more preferably 4.5 V (vs Li/Li⁺) or higher, and extraordinarily preferably 4.6 V (vs Li/Li⁺) or higher.

The conductive agent of the positive electrode is not particularly limited as long as the conductive agent is an electronic conductive material that does not cause chemical changes. Examples of the conductive agent include graphite such as natural graphite (flake graphite, and the like) and artificial graphite, and carbon blacks such as acetylene black, Ketjen black, channel black, furnace black, lamp black, or thermal black. In addition, the graphite and the carbon black may be appropriately mixed for use as the conductive agent. The content of the conductive agent in the positive electrode composite is preferably 1 to 10 wt%, and extraordinarily preferably 1.5 to 5 wt%. The type of the binder in the positive electrode is not particularly limited, and for example, may include at least one of polytetrafluoroethylene, polyvinylidene fluoride, polyacrylonitrile, poly(styrene-co-butadiene), or carboxymethyl cellulose.

The positive electrode may be prepared by the following method: mixing the above-mentioned positive active material with a conductive agent and a binder; adding a high-boiling solvent such as 1-methyl-2-pyrrolidone into the mixture; and kneading the mixture to form a positive electrode composite slurry; and then applying the slurry onto current collector aluminum foil; drying and pressing the slurry to form a positive electrode composite layer to make a positive electrode.

The density of the positive electrode except the current collector is typically 3.5 g/cm³ or more, preferably 3.8 g/cm³ or more, more preferably 4 g/cm³ or more, and further preferably 4.1 g/cm³ or more in order to further increase the capacity of the battery. In addition, as an upper limit, the density is preferably at most 4.6 g/cm³.

As a negative active material for use in a lithium-ion battery, 1 of the following negative active materials may be used alone, or at least 2 thereof may be used in combination: lithium metal or lithium alloy, and lithiation- and delithiation-enabled carbon material [highly graphitizable carbon, hardly graphitizable carbon with a (002) plane spacing of at least 0.37 nm, graphite with a (002) plane spacing of at most 0.34 nm, or the like], (elemental) tin, a tin compound such as SnOₓ (1 ≤ x < 2), (elemental) silicon, a silicon oxygen compound such as SiOₓ (1 ≤ x < 2), a silicon carbon compound, a lithium titanium oxide compound such as Li₄Ti₅O₁₂, and the like.

In terms of the ability to intercalate and deintercalate lithium ions, the negative active material is preferably a highly crystalline carbon material such as artificial graphite or natural graphite, and further preferably a carbon material of a graphitic crystal structure in which the plane spacing (d002) of the lattice plane (002) is at most 0.340 nm, especially 0.335 to 0.337 nm. With a view to increasing the energy density, the negative active material is preferably a silicon oxygen compound, a silicon carbon compound, or a mixture of the silicon oxygen compound or silicon carbon compound and graphite.

The negative electrode may be prepared by the following method: kneading the conductive agent, binder, and high-boiling solvent that are the same as those used in the preparation of the positive electrode, so as to form a negative electrode composite slurry, and then applying the slurry onto current collector copper foil and the like, and then drying and pressing the slurry to form a negative electrode composite layer to make a negative electrode.

The density of the negative electrode except the current collector is typically 1.1 g/cm³ or higher, preferably 1.5 g/cm³ or higher, and more preferably 1.7 g/cm³ or higher in order to further increase the capacity of the battery. In addition, as an upper limit, the density is preferably at most 2.2 g/cm³.

The structure of the lithium battery is not particularly limited, and may be a coin battery, a cylindrical battery, a prismatic battery, a pouch battery, or the like containing a single layer of separator or a plurality of layers of separators.

The separator for use in the battery is not particularly limited, but may be a single-layer or laminated microporous film, woven fabric, or nonwoven fabric of polyolefin such as polypropylene or polyethylene.

The uses of the lithium-ion battery of this application are not particularly limited, and the lithium-ion battery may be used in any electronic device known in the prior art. In some embodiments, the lithium-ion battery of this application is applicable to, but not limited to use in, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The following describes preparation of the lithium-ion battery with reference to specific embodiments. A person skilled in the art understands that the preparation methods described in this application are merely examples, and any other appropriate preparation methods still fall within the scope of this application.

### Embodiments

Some embodiments of the nonaqueous electrolyte solution of this application are illustrated below, but this application is not limited to such embodiments.

### Preparing a lithium-ion battery

The positive active material in Table 1-1 at a mass percentage of 97 wt% and acetylene black at a mass percentage of 1.5 wt% are mixed. The mixture is added into a prepared solution obtained by dissolving 1.5 wt% polyacrylonitrile in 1-methyl-2-pyrrolidone. The mixture is stirred to make a positive electrode composite slurry. The positive electrode composite slurry is applied to aluminum foil, dried, pressed, and then cut into a specified size to make a positive electrode. The density of the positive electrode except the current collector is 4.15 g/cm³.

In addition, the negative active material in Table 1-1 at a mass percentage of 96 wt% and styrene-butadiene rubber at a mass percentage of 2 wt% are mixed. The mixture is added into a prepared solution obtained by dissolving 2 wt% carboxymethyl cellulose in deionized water. The mixture is stirred to make a negative electrode composite slurry. The negative electrode composite slurry is applied to copper foil, dried, pressed, and then cut into a specified size to make a negative electrode. The density of the negative electrode except the current collector is 1.6 g/cm³.

The above-prepared positive electrode and negative electrode are connected to a conducting wire separately. A 10 µm-thick polypropylene porous film is placed between the positive electrode plate and the negative electrode plate, and then the electrode plates are stacked together with the film. In addition, the LiPF₆ that supports the electrolyte is dissolved in a solution containing: (I) fluoroethylene carbonate, (II) ethyl propionate, (III) 1,2,3-tris(2-cyanoethoxy)propane, (IV) a nitrogen-containing lithium salt, and other solvents. Based on the total mass of the nonaqueous electrolyte solution being 100 wt%, the mass percentage and constituents of the substances (I) to (IV), other nitrile compounds, and the first substance are shown in Table 1 and Table 2. The mass percentage of LiPF₆ is 14%. The other solvents are ethylene carbonate, propylene carbonate, and propyl propionate (mass ratio 0.9: 1.2: 4.3).

Subsequently, the stacked structure and 3.2 grams of electrolyte solution are accommodated together in an aluminum laminated housing. The opening of the housing is heat-sealed, and the steps such as chemical formation and capacity grading are performed to make a lithium-ion battery. The lithium-ion battery is in a pouch shape that is 35 mm in width, 48 mm in height, and 5 mm in thickness.

Table 1 shows reference signs of the positive and negative electrode materials and some constituents of the electrolyte solution of the prepared lithium-ion battery. The detailed constituents are shown in Tables 1-1, 1-2, 1-3, and 1-4, respectively.

**Table 1**

| Serial number | Positive electrode | Negative electrode | Nitrogen-containing lithium salt | Other nitrile compounds | First substance |
|---|---|---|---|---|---|
| Embodiment 1 | Positive electrode 1 | Negative electrode 1 | D1 | None | None |
| Embodiment 2 | Positive electrode 1 | Negative electrode 1 | D1 | None | None |
| Embodiment 3 | Positive electrode 1 | Negative electrode 1 | D1 | None | None |
| Embodiment 4 | Positive electrode 1 | Negative electrode 1 | D1 | None | None |
| Embodiment 5 | Positive electrode 1 | Negative electrode 1 | D2 | None | None |
| Embodiment 6 | Positive electrode 1 | Negative electrode 2 | D2 | None | None |
| Embodiment 7 | Positive electrode 1 | Negative electrode 2 | D2 | None | None |
| Embodiment 8 | Positive electrode 1 | Negative electrode 2 | D2 | None | None |
| Embodiment 9 | Positive electrode 1 | Negative electrode 2 | D2 | None | None |
| Embodiment 10 | Positive electrode 2 | Negative electrode 2 | D2 | None | None |
| Embodiment 11 | Positive electrode 2 | Negative electrode 3 | D3 | None | None |
| Embodiment 12 | Positive electrode 2 | Negative electrode 3 | D3 | None | None |
| Embodiment 13 | Positive electrode 2 | Negative electrode 3 | D3 | None | None |
| Embodiment 14 | Positive electrode 2 | Negative electrode 3 | D3 | None | None |
| Embodiment 15 | Positive electrode 2 | Negative electrode 3 | D3 | None | None |
| Embodiment 16 | Positive electrode 2 | Negative electrode 3 | D3 | None | None |
| Embodiment 17 | Positive electrode 2 | Negative electrode 3 | D3 | None | None |
| Embodiment 18 | Positive electrode 2 | Negative electrode 3 | D3 | None | None |
| Embodiment 19 | Positive electrode 2 | Negative electrode 4 | D4 | None | None |
| Embodiment 20 | Positive electrode 3 | Negative electrode 4 | D4 | None | None |
| Embodiment 21 | Positive electrode 3 | Negative electrode 4 | D4 | None | None |
| Embodiment 22 | Positive electrode 3 | Negative electrode 4 | D4 | None | None |
| Embodiment 23 | Positive electrode 3 | Negative electrode 4 | D4 | None | None |
| Embodiment 24 | Positive electrode 3 | Negative electrode 4 | D4 | None | None |
| Embodiment 25 | Positive electrode 3 | Negative electrode 4 | D4 | None | None |
| Embodiment 26 | Positive electrode 3 | Negative electrode 4 | D4 | None | None |
| Embodiment 27 | Positive electrode 3 | Negative electrode 4 | D4 | None | None |
| Embodiment 28 | Positive electrode 4 | Negative electrode 4 | D5 | None | None |
| Embodiment 29 | Positive electrode 4 | Negative electrode 4 | D5 | None | None |
| Embodiment 30 | Positive electrode 4 | Negative electrode 4 | D5 | None | None |
| Embodiment 31 | Positive electrode 4 | Negative electrode 4 | D5 | None | None |
| Embodiment 32 | Positive electrode 4 | Negative electrode 4 | D5 | None | None |
| Embodiment 33 | Positive electrode 4 | Negative electrode 4 | D5 | None | None |
| Embodiment 34 | Positive electrode 4 | Negative electrode 5 | D7 | None | None |
| Embodiment 35 | Positive electrode 4 | Negative electrode 5 | D8 | None | None |
| Embodiment 36 | Positive electrode 5 | Negative electrode 5 | D9 | None | None |
| Embodiment 37 | Positive electrode 5 | Negative electrode 5 | D10 | None | None |
| Embodiment 38 | Positive electrode 5 | Negative electrode 5 | D11 | None | None |
| Embodiment 39 | Positive electrode 5 | Negative electrode 5 | D12 | None | None |
| Embodiment 40 | Positive electrode 5 | Negative electrode 5 | D5 | None | None |
| Embodiment 41 | Positive electrode 6 | Negative electrode 5 | D6 | None | None |
| Embodiment 42 | Positive electrode 6 | Negative electrode 5 | D6 | None | None |
| Embodiment 43 | Positive electrode 6 | Negative electrode 5 | D6 | None | None |
| Embodiment 44 | Positive electrode 6 | Negative electrode 6 | D6 | None | None |
| Embodiment 45 | Positive electrode 6 | Negative electrode 6 | D6 | None | None |
| Embodiment 46 | Positive electrode 6 | Negative electrode 6 | D6 | None | None |
| Embodiment 47 | Positive electrode 6 | Negative electrode 6 | D6 | None | None |
| Embodiment 48 | Positive electrode 6 | Negative electrode 6 | D6 | None | None |
| Embodiment 49 | Positive electrode 6 | Negative electrode 6 | D1(0.5) + D2(0.7) | None | None |
| Embodiment 50 | Positive electrode 6 | Negative electrode 6 | D1(1) + D3(0.8) | None | None |
| Embodiment 51 | Positive electrode 6 | Negative electrode 6 | D1(1.5) + D4(0.6) | None | None |
| Embodiment 52 | Positive electrode 6 | Negative electrode 6 | D1(2) + D5(1.5) | None | None |
| Embodiment 53 | Positive electrode 6 | Negative electrode 6 | D1(2.5) + D6(2.1) | None | None |
| Embodiment 54 | Positive electrode 1 | Negative electrode 1 | D2(3) + D3(2) | None | None |
| Embodiment 55 | Positive electrode 1 | Negative electrode 2 | D3 | N1 | None |
| Embodiment 56 | Positive electrode 1 | Negative electrode 3 | D3 | N2 | None |
| Embodiment 57 | Positive electrode 1 | Negative electrode 4 | D3 | N3 | None |
| Embodiment 58 | Positive electrode 2 | Negative electrode 5 | D3 | N4 | None |
| Embodiment 59 | Positive electrode 3 | Negative electrode 6 | D3 | N5 | None |
| Embodiment 60 | Positive electrode 4 | Negative electrode 1 | D3 | N6 | None |
| Embodiment 61 | Positive electrode 4 | Negative electrode 2 | D3 | N1(2.3) + N2(2.3) | None |
| Embodiment 62 | Positive electrode 4 | Negative electrode 3 | D2 | N1(3) + N3(2.3) | None |
| Embodiment 63 | Positive electrode 4 | Negative electrode 4 | D2 | N1(4) + N4(2.2) | None |
| Embodiment 64 | Positive electrode 4 | Negative electrode 5 | D2 | N2(5) + N3(2.1) | None |
| Embodiment 65 | Positive electrode 4 | Negative electrode 6 | D2 | N2(6) + N4(1.9) | None |
| Embodiment 66 | Positive electrode 4 | Negative electrode 1 | D2 | N3(4) + N4(4) | None |
| Embodiment 67 | Positive electrode 4 | Negative electrode 2 | D2 | None | C1 |
| Embodiment 68 | Positive electrode 4 | Negative electrode 3 | D2 | None | C2 |
| Embodiment 69 | Positive electrode 5 | Negative electrode 4 | D2 | None | C3 |
| Embodiment 70 | Positive electrode 5 | Negative electrode 5 | D3 | None | C4 |
| Embodiment 71 | Positive electrode 5 | Negative electrode 6 | D3 | None | C5 |
| Embodiment 72 | Positive electrode 5 | Negative electrode 1 | D3 | None | C6 |
| Embodiment 73 | Positive electrode 6 | Negative electrode 2 | D3 | None | C7 |
| Embodiment 74 | Positive electrode 6 | Negative electrode 3 | D3 | None | C8 |
| Embodiment 75 | Positive electrode 6 | Negative electrode 4 | D3 | None | C9 |
| Embodiment 76 | Positive electrode 6 | Negative electrode 5 | D1 | None | C10 |
| Embodiment 77 | Positive electrode 6 | Negative electrode 6 | D2 | None | C114 |
| Embodiment 78 | Positive electrode 6 | Negative electrode 1 | D3 | None | C12 |
| Embodiment 79 | Positive electrode 1 | Negative electrode 2 | D4 | N4 | C1(0.3) + C3(2.9) |
| Embodiment 80 | Positive electrode 2 | Negative electrode 3 | D5 | N4 | C1(0.5) + C3(4.3) |
| Embodiment 81 | Positive electrode 3 | Negative electrode 4 | D6 | N1 | C2(0.5) + C3(4.7) |
| Embodiment 82 | Positive electrode 4 | Negative electrode 5 | D3 | N2 | C1(0.1) + C2(0.4) + C3(3) |
| Embodiment 83 | Positive electrode 4 | Negative electrode 6 | D3 | N3 | C1(0.1) + C3(0.7) + C4(3) |
| Embodiment 84 | Positive electrode 4 | Negative electrode 1 | D2 | N4 | C1(0.1) + C3(3) + C5(1.1) |
| Embodiment 85 | Positive electrode 4 | Negative electrode 2 | D2 | N4 | C1(0.7) + C2(1.2) + C5(3) |
| Embodiment 86 | Positive electrode 4 | Negative electrode 3 | D2 | N4 | C1(1) + C2(2.1) + C6(2) |
| Embodiment 87 | Positive electrode 4 | Negative electrode 4 | D2 | N1(4) + N2(2.8) | C1(1) + C3(3) + C6(1.9) |
| Embodiment 88 | Positive electrode 4 | Negative electrode 5 | D2 | N1(5) + N3(2.1) | C1(1) + C2(1) + C3(3) + C6(1.2) |
| Embodiment 89 | Positive electrode 4 | Negative electrode 6 | D2 | N1(2) + N2(1) + N3(0.6) | C1(0.3) + C2(1) + C3(3) + C4(3.4) |
| Embodiment 90 | Positive electrode 5 | Negative electrode 1 | D2 | N2(1) + N3(2) + N4(0.8) | C1(1.5) + C3(5.6) |
| Embodiment 91 | Positive electrode 6 | Negative electrode 2 | D3 | N1(1) + N3(1) + N4(0.4) | C1(2) + C4(5.8) |
| Embodiment 92 | Positive electrode 6 | Negative electrode 3 | D3 | N3(1) + N2(0.9) | C1(1) + C3(7) |
| Embodiment 93 | Positive electrode 6 | Negative electrode 4 | D3 | N1(1.2) + N2(0.4) | C5(3.6) + C3(5) |
| Embodiment 94 | Positive electrode 6 | Negative electrode 5 | D3 | N1(0.5) + N4(0.7) | C1 (0.7) |
| Embodiment 95 | Positive electrode 6 | Negative electrode 6 | D3 | N3 | C1 (0.3) |
| Embodiment 96 | Positive electrode 6 | Negative electrode 1 | D3 | N2 | C1(0.3) + C9(2.9) |
| Embodiment 97 | Positive electrode 6 | Negative electrode 1 | D3 | N1 | C1(0.3) + C10(4.5) |
| Comparative Embodiment 1 | Positive electrode 1 | Negative electrode 1 | D1 | None | None |
| Comparative Embodiment 2 | Positive electrode 1 | Negative electrode 1 | D2 | None | None |
| Comparative Embodiment 3 | Positive electrode 1 | Negative electrode 1 | D3 | None | None |
| Comparative Embodiment 4 | Positive electrode 1 | Negative electrode 1 | D4 | None | None |
| Comparative Embodiment 5 | Positive electrode 1 | Negative electrode 1 | D1 | None | None |
| Comparative Embodiment 6 | Positive electrode 1 | Negative electrode 1 | D1 | None | None |
| Comparative Embodiment 7 | Positive electrode 1 | Negative electrode 1 | D1 | None | None |
| Comparative Embodiment 8 | Positive electrode 1 | Negative electrode 1 | D1 | None | None |

| | | | | | |
|---|---|---|---|---|---|
| In the table above, each numerical value in () is a weight percentage (wt%). | | | | | |

**Table 1-1 Positive electrode**

| Serial number | Constituent |
|---|---|
| Positive electrode 1 | Lithium cobalt oxide, containing 0.45 wt% aluminum + 0.1 wt% magnesium + 0.08 wt% titanium |
| Positive electrode 2 | Lithium cobalt oxide, containing 0.45 wt% aluminum + 0.12 wt% magnesium + 0.08 wt% zirconium |
| Positive electrode 3 | Lithium cobalt oxide, containing 0.45 wt% aluminum + 0.12 wt% magnesium + 0.1 wt% lanthanum |
| Positive electrode 4 | Lithium cobalt oxide, containing 0.4 wt% aluminum + 0.15 wt% magnesium + 0.1 wt% iridium |
| Positive electrode 5 | Lithium cobalt oxide, containing 0.4 wt% aluminum + 0.15 wt% magnesium + 0.1 wt% tungsten |
| Positive electrode 6 | Lithium cobalt oxide, containing 0.5 wt% aluminum + 0.15 wt% magnesium + 0.1 wt% cerium |

**Table 1-2 Negative electrode**

| Serial number | Constituent |
|---|---|
| Negative electrode 1 | Artificial graphite |
| Negative electrode 2 | Artificial graphite + natural graphite (mass ratio 90: 10) |
| Negative electrode 3 | Artificial graphite + silicon-carbon compound (mass ratio 90: 10) |
| Negative electrode 4 | Artificial graphite + silicon-carbon compound (mass ratio 95: 5) |
| Negative electrode 5 | Artificial graphite + silicon-oxygen compound (mass ratio 90: 10) |
| Negative electrode 6 | Artificial graphite + hard carbon (mass ratio 90: 10) |

**Table 1-3 Electrolyte solution**

| Reference sign | Name of substance | Reference sign | Name of substance |
|---|---|---|---|
| D1 | LiN(FSO₂)₂ | C1 | Lithium difluorophosphate |
| D2 | LiN(FSO₂)(CF₃SO₂) | C2 | Vinylene carbonate |
| D3 | LiN(CF₃SO₂)₂ | C3 | Fluoroethylene carbonate |
| D4 | LiN(FCO)(FSO₂) | C4 | Lithium fluorosulfonate |
| D5 | LiN(C₂F₅SO₂)₂ | C5 | 1,3-propane sultone |
| D6 | LiN(FCO)₂ | C6 | Ethylene sulfate |
| D7 | Cyclic lithium 1,2-perfluoroethane disulfonimide | C7 | Fluorobenzene |
| D8 | Cyclic lithium 1,3-perfluoropropane disulfonimide | C8 | Biphenyl |
| D9 | LiN(CF₃SO₂)(C₄F₉SO₂) | C9 | Tris(trimethylsilyl)phosphate |
| D10 | 4,5-dicyano-2-trifluoromethylimidazole lithium salt | C10 | Tris(trimethylsilyl)borate |
| D11 | 4,5-dicyano-2-pentafluoroethylimidazole lithium salt | C11 | 1,3-propylene glycol cyclosulfate |
| D12 | 2,4,5-tricyanoimidazole lithium salt | C12 | Cyclohexylbenzene |
| N1 | Succinonitrile | N7 | 1,3,5-pentanetricarbonitrile |
| N2 | Adiponitrile | N8 | 1,2,3-propanetricarbonitrile |
| N3 | Ethylene glycol bis(propionitrile)ether | N9 | 1,2,6-tris(cyanoethoxy)hexane |
| N4 | 1,3,6-hexanetricarbonitrile | N10 | 1,2,4-tris(2-cyanoethoxy)butane |
| N5 | 1,1,1-tris(cyanoethoxy methylene)ethane | N11 | 1,1,1-tris(cyanoethoxy methylene)propane |
| N6 | 1,2,5-tris(cyanoethoxy)pentane | N12 | 3-methyl-1,3,5-tris(cyanoethoxy)pentane |

### Test methods

### Volume resistance of the positive electrode

After the lithium-ion battery obtained in each embodiment and comparative embodiment is disassembled, the positive electrode is die-cut into a circular shape with a diameter of 12 mm. The circular specimen of the positive electrode is pressed under a pressure of 2 kN at 25 °C by using a tensile compression tester (model SV-301NA, manufactured by IMADA SEISAKUSHO Co., Ltd.) and an electrochemical measuring device (model HSV-110, manufactured by HOKUTO DENKO Corporation). A current of 10 mA is applied. 10 minutes later, the voltage value is read, and the volume resistance of the positive electrode is measured. Evaluation is performed based on the following criteria:
A: volume resistance ≤ 180 Ω·cm;
B: 180 Ω·cm < volume resistance ≤ 250 Ω·cm;
C: 250 Ω·cm < volume resistance ≤ 300 Ω·cm;
D: volume resistance > 350 Ω·cm.

### Expansion rate of the negative electrode

The lithium-ion battery in each embodiment and comparative embodiment is discharged at a constant current of 0.2C in a 25 °C environment until the voltage of the battery reaches 3.00 V. Subsequently, the discharged lithium-ion battery is disassembled to take out a negative electrode. The overall thickness of the negative electrode is measured, and the thickness of the current collector is subtracted from the overall thickness of the negative electrode to obtain a pre-cycling thickness of the negative electrode, denoted as d0.

Next, the lithium-ion battery is reassembled. The reassembled lithium-ion battery is subjected to charge-and-discharge operations for 50 cycles at a battery voltage of 4.5 V to 3.0 V and a charge-and-discharge rate of 1C in a 25 °C environment. Finally, the lithium-ion battery subjected to 50 cycles is charged at a rate of 1C in a 25 °C environment. Subsequently, the charged lithium-ion battery is disassembled to take out the negative electrode. The overall thickness of the negative electrode is measured, and the thickness of the current collector is subtracted from the overall thickness of the negative electrode to obtain a post-cycling thickness of the negative electrode, denoted as d1. Afterward, the difference between the post-cycling thickness d1 of the negative electrode and the pre-cycling thickness d0 of the negative electrode is calculated. The difference is used to represent the expansion rate of the post-cycling negative electrode: expansion rate = {(d1 - d0)/d0]×100 (%). Evaluation is performed based on the following criteria. The smaller the expansion rate of the post-cycling negative electrode, the longer the service life of the lithium-ion battery. In other words, the negative electrode composite material layer can still maintain a proper structure even after repeated charge-and-discharge cycles.
A: Expansion rate of the post-cycling negative electrode < 10%;
B: 10% ≤ expansion rate of the post-cycling negative electrode < 15%;
C: 15% ≤ expansion rate of the post-cycling negative electrode < 20%;
D: Expansion rate of the post-cycling negative electrode ≥ 25%.

### Low-temperature direct-current resistance performance

The lithium-ion battery obtained in each embodiment and comparative embodiment is charged at a current of 140 mA at 25 °C until the state of charge (SoC) is 50%. Afterward, at -20 °C, the battery is discharged at a current of 140 mA for 20 seconds and then charged at 140 mA for 20 seconds. The voltage change during the discharge is recorded as ΔV0.2. Next, the same test is performed at a current of 350 mA, 700 mA, and 1050 mA to obtain ΔV0.5, ΔV1.0, and ΔV1.5 separately.

Next, a graph is plotted with the discharge current value as an X-axis and with the ΔV as a Y-axis to find an approximate straight line passing through the origin. The slope of the approximate straight line represents the direct-current resistance (DCR). The DCR is evaluated based on the following criteria.
A: DCR < 0.5 Ω;
B: 0.5 Ω ≤ DCR < 0.8 Ω;
C: 0.8 Ω ≤ DCR < 1.2 Ω;
D: DCR ≥ 1.2 Q.

### Resistance rise during high-temperature cycling test

The lithium-ion battery obtained in each embodiment or comparative embodiment is tightened by applying a specific pressure of 1 MPa with a pressurizing jig, and then a cycling test is carried out at 65 °C. The conditions of the cycling test are set as: charging at a constant current of 1C (until a voltage of 4.5 V) and a constant voltage (until a cut-off current of 1/50C), and discharging at a constant current of 1C (until a cut-off voltage of 3.0 V). The charge-and-discharge cycles are repeated 500 times. The 1^{st}-cycle discharge capacity retention rate and the 500^{th}-cycle discharge capacity retention rate are recorded. The resistance retention rates (%) before and after the cycling are calculated as: resistance retention rate (%) = (500^{th}-cycle discharge capacity retention rate/1^{st}-cycle discharge capacity retention rate) × 100. Evaluation is performed based on the following criteria. The greater the resistance retention rate after the cycling versus before the cycling, the smaller the resistance rise during the cycling test.
A: 85% ≤ resistance retention rate;
B: 80% ≤ resistance retention rate < 85%;
C: 70% ≤ resistance retention rate < 80%;
D: Resistance retention rate < 70%.

In Table 2, a1 represents the mass percentage of (I) fluoroethylene carbonate, a2 represents the mass percentage of (II) ethyl propionate, a3 represents the mass percentage of (III) 1,2,3-tris(2-cyanoethoxy)propane, a4 represents the total mass percentage of (IV) nitrogen-containing lithium salts, b represents the total mass percentage of other nitrile compounds, and c represents the total mass percentage of the first substance.

**Table 2**

| Serial number | FEC/al | TCEP/a3 | EP/a2 | Nitrogen-containing lithium salt/a4 | al+a3 | a2+a4 | b | c | Volume resistance | Expansion rate of negative electrode | Low-temperature resistance | High-temperature cycling |
|---|---|---|---|---|---|---|---|---|---|---|---|---|
| Embodiment 1 | 2.1 | 2.5 | 22.5 | 1.2 | 4.6 | 23.7 | 0 | 0 | B | C | B | B |
| Embodiment 2 | 2.5 | 2.5 | 22.5 | 1.2 | 5 | 23.7 | 0 | 0 | B | B | B | B |
| Embodiment 3 | 3.2 | 2.5 | 22.5 | 1.2 | 5.7 | 23.7 | 0 | 0 | B | B | B | B |
| Embodiment 4 | 4.3 | 2.5 | 22.5 | 1.2 | 6.8 | 23.7 | 0 | 0 | B | B | B | B |
| Embodiment 5 | 5.1 | 2.5 | 22.5 | 1.2 | 7.6 | 23.7 | 0 | 0 | B | B | B | B |
| Embodiment 6 | 5.8 | 2.5 | 22.5 | 1.2 | 8.3 | 23.7 | 0 | 0 | B | B | B | B |
| Embodiment 7 | 6.1 | 2.5 | 22.5 | 1.2 | 8.6 | 23.7 | 0 | 0 | B | B | B | B |
| Embodiment 8 | 6.7 | 2.5 | 22.5 | 1.2 | 9.2 | 23.7 | 0 | 0 | B | B | B | B |
| Embodiment 9 | 7.2 | 2.5 | 22.5 | 1.2 | 9.7 | 23.7 | 0 | 0 | B | B | B | B |
| Embodiment 10 | 7.5 | 2.5 | 22.5 | 1.2 | 10 | 23.7 | 0 | 0 | B | B | B | B |
| Embodiment 11 | 8.7 | 2.5 | 22.5 | 0.5 | 11.2 | 23 | 0 | 0 | B | B | B | B |
| Embodiment 12 | 9 | 1.5 | 22.5 | 0.5 | 10.5 | 23 | 0 | 0 | B | C | B | B |
| Embodiment 13 | 4.3 | 2.5 | 5 | 0.5 | 6.8 | 5.5 | 0 | 0 | B | C | B | B |
| Embodiment 14 | 4.3 | 2.5 | 8.5 | 0.5 | 6.8 | 9 | 0 | 0 | B | B | B | B |
| Embodiment 15 | 4.3 | 2.5 | 10.8 | 0.5 | 6.8 | 11.3 | 0 | 0 | B | B | B | B |
| Embodiment 16 | 4.3 | 2.5 | 13.9 | 0.5 | 6.8 | 14.4 | 0 | 0 | B | B | B | B |
| Embodiment 17 | 4.3 | 2.5 | 16.7 | 0.5 | 6.8 | 17.2 | 0 | 0 | B | B | B | B |
| Embodiment 18 | 4.3 | 2.5 | 22.3 | 0.5 | 6.8 | 22.8 | 0 | 0 | B | B | B | B |
| Embodiment 19 | 4.3 | 2.5 | 26.9 | 0.5 | 6.8 | 27.4 | 0 | 0 | B | B | B | B |
| Embodiment 20 | 4.3 | 2.5 | 31.2 | 0.5 | 6.8 | 31.7 | 0 | 0 | B | B | B | B |
| Embodiment 21 | 4.3 | 2.5 | 33.6 | 0.5 | 6.8 | 34.1 | 0 | 0 | B | B | B | B |
| Embodiment 22 | 4.3 | 2.5 | 34 | 0.5 | 6.8 | 34.5 | 0 | 0 | B | B | B | B |
| Embodiment 23 | 4.3 | 2.5 | 35 | 0.5 | 6.8 | 35.5 | 0 | 0 | B | C | B | B |
| Embodiment 24 | 4.3 | 0.7 | 22.5 | 0.5 | 5 | 23 | 0 | 0 | B | B | C | B |
| Embodiment 25 | 4.3 | 0.8 | 22.5 | 0.5 | 5.1 | 23 | 0 | 0 | B | B | B | B |
| Embodiment 26 | 4.3 | 0.9 | 22.5 | 0.5 | 5.2 | 23 | 0 | 0 | B | B | B | B |
| Embodiment 27 | 4.3 | 1.2 | 22.5 | 0.5 | 5.5 | 23 | 0 | 0 | B | B | B | B |
| Embodiment 28 | 4.3 | 1.6 | 22.5 | 0.5 | 5.9 | 23 | 0 | 0 | B | B | B | B |
| Embodiment 29 | 4.3 | 2.1 | 22.5 | 0.5 | 6.4 | 23 | 0 | 0 | B | B | B | B |
| Embodiment 30 | 4.3 | 2.7 | 22.5 | 0.5 | 7 | 23 | 0 | 0 | B | B | B | B |
| Embodiment 31 | 4.3 | 3.6 | 22.5 | 0.5 | 7.9 | 23 | 0 | 0 | B | B | B | B |
| Embodiment 32 | 4.3 | 4.1 | 22.5 | 0.5 | 8.4 | 23 | 0 | 0 | B | B | B | B |
| Embodiment 33 | 4.3 | 4.9 | 22.5 | 0.5 | 9.2 | 23 | 0 | 0 | B | B | B | B |
| Embodiment 34 | 4.3 | 5 | 22.5 | 0.5 | 9.3 | 23 | 0 | 0 | B | B | C | B |
| Embodiment 35 | 4.3 | 2.1 | 22.5 | 0.01 | 6.4 | 22.51 | 0 | 0 | B | B | B | C |
| Embodiment 36 | 4.3 | 2.1 | 22.5 | 0.02 | 6.4 | 22.52 | 0 | 0 | B | B | B | B |
| Embodiment 37 | 4.3 | 2.1 | 22.5 | 0.03 | 6.4 | 22.53 | 0 | 0 | B | B | B | B |
| Embodiment 38 | 4.3 | 2.1 | 22.5 | 0.07 | 6.4 | 22.57 | 0 | 0 | B | B | B | B |
| Embodiment 39 | 4.3 | 2.1 | 22.5 | 0.08 | 6.4 | 22.58 | 0 | 0 | B | B | B | B |
| Embodiment 40 | 4.3 | 2.1 | 22.5 | 0.12 | 6.4 | 22.62 | 0 | 0 | B | B | B | B |
| Embodiment 41 | 4.3 | 2.1 | 22.5 | 0.15 | 6.4 | 22.65 | 0 | 0 | B | B | B | B |
| Embodiment 42 | 4.3 | 2.1 | 22.5 | 0.19 | 6.4 | 22.69 | 0 | 0 | B | B | B | B |
| Embodiment 43 | 4.3 | 2.1 | 22.5 | 0.21 | 6.4 | 22.71 | 0 | 0 | B | B | B | B |
| Embodiment 44 | 4.3 | 2.1 | 22.5 | 0.27 | 6.4 | 22.77 | 0 | 0 | B | B | B | B |
| Embodiment 45 | 4.3 | 2.1 | 22.5 | 0.35 | 6.4 | 22.85 | 0 | 0 | B | B | B | B |
| Embodiment 46 | 4.3 | 2.1 | 22.5 | 0.51 | 6.4 | 23.01 | 0 | 0 | B | B | B | B |
| Embodiment 47 | 4.3 | 2.1 | 22.5 | 0.79 | 6.4 | 23.29 | 0 | 0 | B | B | B | B |
| Embodiment 48 | 4.3 | 2.1 | 22.5 | 0.92 | 6.4 | 23.42 | 0 | 0 | B | B | B | B |
| Embodiment 49 | 4.3 | 2.1 | 22.5 | 1.2 | 6.4 | 23.7 | 0 | 0 | B | B | B | B |
| Embodiment 50 | 4.3 | 2.1 | 22.5 | 1.8 | 6.4 | 24.3 | 0 | 0 | B | B | B | B |
| Embodiment 51 | 4.3 | 2.1 | 22.5 | 2.1 | 6.4 | 24.6 | 0 | 0 | B | B | B | B |
| Embodiment 52 | 4.3 | 2.1 | 22.5 | 3.5 | 6.4 | 26 | 0 | 0 | B | B | B | B |
| Embodiment 53 | 4.3 | 2.1 | 22.5 | 4.6 | 6.4 | 27.1 | 0 | 0 | B | B | B | B |
| Embodiment 54 | 4.3 | 2.1 | 22.5 | 5 | 6.4 | 27.5 | 0 | 0 | B | B | B | C |
| Embodiment 55 | 4.3 | 2.1 | 22.5 | 0.5 | 6.4 | 23 | 0.3 | 0 | B | B | A | A |
| Embodiment 56 | 4.3 | 2.1 | 22.5 | 0.5 | 6.4 | 23 | 0.6 | 0 | B | A | A | A |
| Embodiment 57 | 4.3 | 2.1 | 22.5 | 0.5 | 6.4 | 23 | 0.9 | 0 | B | A | A | A |
| Embodiment 58 | 4.3 | 2.1 | 22.5 | 0.5 | 6.4 | 23 | 1.4 | 0 | B | A | A | A |
| Embodiment 59 | 4.3 | 2.1 | 22.5 | 0.5 | 6.4 | 23 | 2.8 | 0 | B | A | A | A |
| Embodiment 60 | 4.3 | 2.1 | 22.5 | 0.5 | 6.4 | 23 | 3.9 | 0 | B | A | A | A |
| Embodiment 61 | 4.3 | 2.1 | 22.5 | 0.5 | 6.4 | 23 | 4.6 | 0 | B | A | A | A |
| Embodiment 62 | 4.3 | 2.1 | 22.5 | 0.5 | 6.4 | 23 | 5.3 | 0 | B | A | A | A |
| Embodiment 63 | 4.3 | 2.1 | 22.5 | 0.5 | 6.4 | 23 | 6.2 | 0 | B | A | A | A |
| Embodiment 64 | 4.3 | 2.1 | 22.5 | 0.5 | 6.4 | 23 | 7.1 | 0 | B | A | A | A |
| Embodiment 65 | 4.3 | 2.1 | 22.5 | 0.5 | 6.4 | 23 | 7.9 | 0 | B | A | A | A |
| Embodiment 66 | 4.3 | 2.1 | 22.5 | 0.5 | 6.4 | 23 | 8 | 0 | B | A | B | A |
| Embodiment 67 | 4.3 | 2.1 | 22.5 | 0.5 | 6.4 | 23 | 0 | 0.3 | A | B | A | B |
| Embodiment 68 | 4.3 | 2.1 | 22.5 | 0.5 | 6.4 | 23 | 0 | 0.9 | A | A | A | B |
| Embodiment 69 | 4.3 | 2.1 | 22.5 | 0.5 | 6.4 | 23 | 0 | 1.6 | A | A | A | B |
| Embodiment 70 | 4.3 | 2.1 | 22.5 | 0.5 | 6.4 | 23 | 0 | 2.8 | A | A | A | B |
| Embodiment 71 | 4.3 | 2.1 | 22.5 | 0.5 | 6.4 | 23 | 0 | 3.9 | A | A | A | B |
| Embodiment 72 | 4.3 | 2.1 | 22.5 | 0.5 | 6.4 | 23 | 0 | 4.6 | A | A | A | B |
| Embodiment 73 | 4.3 | 2.1 | 22.5 | 0.5 | 6.4 | 23 | 0 | 5.3 | A | A | A | B |
| Embodiment 74 | 4.3 | 2.1 | 22.5 | 0.5 | 6.4 | 23 | 0 | 6.7 | A | A | A | B |
| Embodiment 75 | 4.3 | 2.1 | 22.5 | 0.5 | 6.4 | 23 | 0 | 7.1 | A | A | A | B |
| Embodiment 76 | 4.3 | 2.1 | 22.5 | 0.5 | 6.4 | 23 | 0 | 8.2 | A | A | A | B |
| Embodiment 77 | 4.3 | 2.1 | 22.5 | 0.5 | 6.4 | 23 | 0 | 9.7 | A | A | A | B |
| Embodiment 78 | 4.3 | 2.1 | 22.5 | 0.5 | 6.4 | 23 | 0 | 10 | A | B | A | B |
| Embodiment 79 | 4.3 | 2.1 | 22.5 | 0.5 | 6.4 | 23 | 1.8 | 3.2 | A | A | A | A |
| Embodiment 80 | 4.3 | 2.1 | 22.5 | 0.5 | 6.4 | 23 | 2.1 | 4.8 | A | A | A | A |
| Embodiment 81 | 4.3 | 2.1 | 22.5 | 0.5 | 6.4 | 23 | 3.2 | 5.2 | A | A | A | A |
| Embodiment 82 | 4.3 | 2.1 | 22.5 | 0.5 | 6.4 | 23 | 4.3 | 3.5 | A | A | A | A |
| Embodiment 83 | 4.3 | 2.1 | 22.5 | 0.5 | 6.4 | 23 | 4.7 | 3.8 | A | A | A | A |
| Embodiment 84 | 4.3 | 2.1 | 22.5 | 0.5 | 6.4 | 23 | 5.1 | 4.2 | A | A | A | A |
| Embodiment 85 | 4.3 | 2.1 | 22.5 | 0.5 | 6.4 | 23 | 5.9 | 4.9 | A | A | A | A |
| Embodiment 86 | 4.3 | 2.1 | 22.5 | 0.5 | 6.4 | 23 | 6.2 | 5.1 | A | A | A | A |
| Embodiment 87 | 4.3 | 2.1 | 22.5 | 0.5 | 6.4 | 23 | 6.8 | 5.9 | A | A | A | A |
| Embodiment 88 | 4.3 | 2.1 | 22.5 | 0.5 | 6.4 | 23 | 7.1 | 6.2 | A | A | A | A |
| Embodiment 89 | 4.3 | 2.1 | 22.5 | 0.5 | 6.4 | 23 | 3.6 | 7.7 | A | A | A | A |
| Embodiment 90 | 4.3 | 2.1 | 22.5 | 0.5 | 6.4 | 23 | 3.8 | 7.1 | A | A | A | A |
| Embodiment 91 | 4.3 | 2.1 | 22.5 | 0.5 | 6.4 | 23 | 2.4 | 7.8 | A | A | A | A |
| Embodiment 92 | 4.3 | 2.1 | 22.5 | 0.5 | 6.4 | 23 | 1.9 | 8 | A | A | A | A |
| Embodiment 93 | 4.3 | 2.1 | 22.5 | 0.5 | 6.4 | 23 | 1.6 | 8.6 | A | A | A | A |
| Embodiment 94 | 4.3 | 2.1 | 22.5 | 0.5 | 6.4 | 23 | 1.2 | 0.7 | A | A | A | A |
| Embodiment 95 | 4.3 | 2.1 | 22.5 | 0.5 | 6.4 | 23 | 0.8 | 0.3 | A | A | A | A |
| Embodiment 96 | 4.3 | 2.1 | 22.5 | 0.5 | 6.4 | 23 | 4.1 | 3.2 | A | A | A | A |
| Embodiment 97 | 4.3 | 2.1 | 22.5 | 0.5 | 6.4 | 23 | 3.5 | 4.8 | A | A | A | A |
| Comparative Embodiment 1 | 2 | 2.1 | 22.5 | 0.5 | 4.1 | 23 | 0 | 0 | D | D | C | D |
| Comparative Embodiment 2 | 9.3 | 2 | 22.5 | 0.5 | 11.3 | 23 | 0 | 0 | D | D | D | D |
| Comparative Embodiment 3 | 4.3 | 0.6 | 22.5 | 0.5 | 4.9 | 23 | 0 | 0 | D | C | D | D |
| Comparative Embodiment 4 | 4.3 | 5.1 | 22.5 | 0.5 | 9.4 | 23 | 0 | 0 | D | D | D | D |
| Comparative Embodiment 5 | 4.3 | 2.1 | 4.9 | 0.5 | 6.4 | 5.4 | 0 | 0 | D | D | D | C |
| Comparative Embodiment 6 | 4.3 | 2.1 | 36 | 0.5 | 6.4 | 36.5 | 0 | 0 | D | C | D | D |
| Comparative Embodiment 7 | 4.3 | 2.1 | 22.5 | 0.008 | 6.4 | 22.51 | 0 | 0 | D | D | D | D |
| Comparative Embodiment 8 | 4.3 | 2.1 | 22.5 | 5.1 | 6.4 | 27.6 | 0 | 0 | D | D | C | D |

When the nonaqueous electrolyte solution contains the fluoroethylene carbonate at a mass percentage of 2.1 wt% to 9 wt%, the ethyl propionate at a mass percentage of 5 wt% to 35 wt%, the 1,2,3-tris(2-cyanoethoxy)propane at a mass percentage of 0.7 wt% to 5 wt%, the nitrogen-containing lithium salt at a mass percentage of 0.01 wt% to 5 wt%, and the aggregate mass percentage of the fluoroethylene carbonate and the 1,2,3-tris(2-cyanoethoxy)propane is 4.6 wt% to 11.2 wt%, and the aggregate mass percentage of the ethyl propionate and the nitrogen-containing lithium salt is 5.5 wt% to 36.5 wt%, not only the volume resistance of the positive electrode and the expansion of the negative electrode of the lithium-ion battery can be alleviated, but also the high-temperature cycling performance and the low-temperature direct-current resistance performance of the battery can be well exerted in a balanced manner.

Especially, when the nonaqueous electrolyte solution further includes other nitrile compounds, other nitrile compounds can reduce the impedance of the coating formed by the reaction between the above-mentioned substances (I) to (IV) and the active species on the surface of the positive electrode, facilitate the charge transfer of lithium ions, and improve the resistance performance after high-temperature cycling and the low-temperature performance.

Especially, when the nonaqueous electrolyte solution further includes a first substance, the applicant hereof has also unexpectedly discovered that the first substance can suppress the decomposition of the above-mentioned coating during charging and discharging, thereby further alleviating the resistance after high-temperature cycling and improving the low-temperature performance.

References to "embodiments", "some embodiments", "an embodiment", "another example", "example", "specific example" or "some examples" throughout the specification mean that specified features, structures, materials, or performance described in such embodiment(s) or example(s) are included in at least one embodiment or example in this application. Therefore, descriptions throughout the specification, which make references by using expressions such as "in some embodiments", "in an embodiment", "in one embodiment", "in another example", "in an example", "in a specific example", or "example", do not necessarily refer to the same embodiment(s) or example(s) in this application. In addition, specific features, structures, materials, or performance herein may be combined in one or more embodiments or examples in any appropriate manner.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

## Claims

1. A nonaqueous electrolyte solution for a lithium-ion battery, **characterized in that** the nonaqueous electrolyte solution comprises a nonaqueous solvent and a lithium salt, wherein, the nonaqueous electrolyte solution comprises fluoroethylene carbonate, ethyl propionate, 1,2,3-tris(2-cyanoethoxy)propane, and a nitrogen-containing lithium salt;
based on a total mass of the nonaqueous electrolyte solution,
a mass percentage of the fluoroethylene carbonate is 2.1 wt% to 9 wt%;
a mass percentage of the ethyl propionate is 5 wt% to 35 wt%;
a mass percentage of the 1,2,3-tris(2-cyanoethoxy)propane is 0.7 wt% to 5 wt%; and
a mass percentage of the nitrogen-containing lithium salt is 0.01 wt% to 5 wt%, wherein
an aggregate mass percentage of the fluoroethylene carbonate and the 1,2,3-tris(2-cyanoethoxy)propane is 4.6 wt% to 11.2 wt%, and an aggregate mass percentage of the ethyl propionate and the nitrogen-containing lithium salt is 5.5 wt% to 36.5 wt%.

2. The nonaqueous electrolyte solution according to claim 1, **characterized in that** the nitrogen-containing lithium salt comprises at least one of LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, cyclic lithium 1,2-perfluoroethane(disulfonyl)imide, cyclic lithium 1,3-perfluoropropane(disulfonyl)imide, LiN(CF₃SO₂)(C₄F₉SO₂), 4,5-dicyano-2-trifluoromethylimidazole lithium salt, 4,5-dicyano-2-pentafluoroethylimidazole lithium salt, 2,4,5-tricyanoimidazole lithium salt, 5,6-dicyano-2-trifluoromethylbenzimidazole lithium salt, 5,6-dicyano-2-pentafluoroethylbenzimidazole lithium salt, 2,5,6-tricyanobenzimidazole lithium salt, 4,7-dicyano-2-trifluoromethylbenzimidazole lithium salt, 4,7-dicyano-2-pentafluoroethylbenzimidazole lithium salt, 2,4,7-tricyanobenzimidazole lithium salt, 4,5,6,7-tetracyano-2-trifluoromethylbenzimidazole lithium salt, 4,5,6,7-tetracyano-2-pentafluoroethylbenzimidazole lithium salt, or 2,4,5,6,7-pentacyanobenzimidazole lithium salt.

3. The nonaqueous electrolyte solution according to claim 1 or 2, **characterized in that**, based on the total mass of the nonaqueous electrolyte solution, the mass percentage of the fluoroethylene carbonate is 2.5 wt% to 8.7 wt%; or, the mass percentage of the 1,2,3-tris(2-cyanoethoxy)propane is 0.8 wt% to 4.1 wt%; or, the aggregate mass percentage of the fluoroethylene carbonate and the 1,2,3-tris(2-cyanoethoxy)propane is 5 wt% to 10.5 wt%.

4. The nonaqueous electrolyte solution according to any one of claims 1-3, **characterized in that**, based on the total mass of the nonaqueous electrolyte solution, the mass percentage of the fluoroethylene carbonate is 3.2 wt% to 7.5 wt%; or, the mass percentage of the 1,2,3-tris(2-cyanoethoxy)propane is 1.2 wt% to 3.6 wt%; or, the aggregate mass percentage of the fluoroethylene carbonate and the 1,2,3-tris(2-cyanoethoxy)propane is 5.7 wt% to 10 wt%.

5. The nonaqueous electrolyte solution according to any one of claims 1-4, **characterized in that**, based on the total mass of the nonaqueous electrolyte solution, the mass percentage of the fluoroethylene carbonate is 4.3 wt% to 7.2 wt%; or, the mass percentage of the 1,2,3-tris(2-cyanoethoxy)propane is 1.2 wt% to 2.7 wt%; or, the aggregate mass percentage of the fluoroethylene carbonate and the 1,2,3-tris(2-cyanoethoxy)propane is 6.8 wt% to 9.7 wt%.

6. The nonaqueous electrolyte solution according to any one of claims 1-5, **characterized in that**, based on the total mass of the nonaqueous electrolyte solution, the mass percentage of the ethyl propionate is 8.5 wt% to 34 wt%; or, the mass percentage of the nitrogen-containing lithium salt is 0.02 wt% to 4.6 wt%; or, the aggregate mass percentage of the ethyl propionate and the nitrogen-containing lithium salt is 9 wt% to 34.5 wt%.

7. The nonaqueous electrolyte solution according to any one of claims 1-6, **characterized in that**, based on the total mass of the nonaqueous electrolyte solution, the mass percentage of the ethyl propionate is 10.8 wt% to 33.6 wt%; or, the mass percentage of the nitrogen-containing lithium salt is 0.03 wt% to 3.5 wt%; or, the aggregate mass percentage of the ethyl propionate and the nitrogen-containing lithium salt is 11.3 wt% to 34.1 wt%.

8. The nonaqueous electrolyte solution according to any one of claims 1-7, **characterized in that**, based on the total mass of the nonaqueous electrolyte solution, the mass percentage of the ethyl propionate is 13.9 wt% to 31.2 wt%; or, the mass percentage of the nitrogen-containing lithium salt is 0.07 wt% to 2.1 wt%; or, the aggregate mass percentage of the ethyl propionate and the nitrogen-containing lithium salt is 14.4 wt% to 31.7 wt%.

9. The nonaqueous electrolyte solution according to any one of claims 1-8, **characterized in that** the nonaqueous electrolyte solution further comprises other nitrile compounds; and the other nitrile compounds comprise at least one of succinonitrile, adiponitrile, ethylene glycol bis(propionitrile)ether, 1,3,5-pentanetricarbonitrile, 1,2,3-propanetricarbonitrile, 1,3,6-hexanetricarbonitrile, 1,2,6-hexanetricarbonitrile, 1,2,4-tris(2-cyanoethoxy)butane, 1,1,1-tris(cyanoethoxymethylene)ethane, 1,1,1-tris(cyanoethoxymethylene)propane, 3-methyl 1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

10. The nonaqueous electrolyte solution according to claim 9, **characterized in that** the other nitrile compounds comprise succinonitrile and adiponitrile; or, the other nitrile compounds comprise succinonitrile and ethylene glycol bis(propionitrile)ether; or, the other nitrile compounds comprise adiponitrile and ethylene glycol bis(propionitrile)ether; or, the other nitrile compounds comprise succinonitrile and 1,3,6-hexanetricarbonitrile; or, the other nitrile compounds comprise adiponitrile and 1,3,6-hexanetricarbonitrile; or, the other nitrile compounds comprise ethylene glycol bis(propionitrile)ether and 1,3,6-hexanetricarbonitrile.

11. The nonaqueous electrolyte solution according to claim 9, **characterized in that**, based on the total mass of the nonaqueous electrolyte solution, the mass percentage of the other nitrile compounds is 0.3 wt% to 8 wt%.

12. The nonaqueous electrolyte solution according to claim 9, **characterized in that**, based on the total mass of the nonaqueous electrolyte solution, the mass percentage of the other nitrile compounds is 1.4 wt% to 6.2 wt%.

13. The nonaqueous electrolyte solution according to any one of claims 1-12, **characterized in that** the nonaqueous electrolyte solution further comprises a first substance; and the first substance comprises at least one of vinylene carbonate, lithium difluorophosphate, lithium fluorosulfonate, 1,3-propane sultone, 1,3-propene sultone, ethylene sulfate, 1,3-propylene glycol cyclosulfate, fluorobenzene, cyclohexylbenzene, biphenyl, tris(trimethylsilyl)phosphate, or tris(trimethylsilyl)borate.

14. The nonaqueous electrolyte solution according to claim 13, **characterized in that**, based on the total mass of the nonaqueous electrolyte solution, a mass percentage of any one of compounds in the first substance is 0.3 wt% to 10 wt%.

15. A lithium-ion battery, comprising: a positive electrode, a negative electrode, and a nonaqueous electrolyte solution; wherein the nonaqueous electrolyte solution comprises an electrolyte salt dissolved in a nonaqueous solvent; **characterized in that** the nonaqueous electrolyte solution is the nonaqueous electrolyte solution according to any one of claims 1 to 14; and the positive electrode comprises lithium cobalt oxide containing at least three of elements aluminum, magnesium, titanium, zirconium, lanthanum, iridium, cerium, or tungsten; and/or
the negative electrode comprises a negative active material, and the negative active material comprises at least 1 of lithium metal, a lithium alloy, a lithiation- and delithiation-enabled carbon material, elemental tin, a tin compound, elemental silicon, a silicon oxygen compound, a silicon carbon compound, or a lithium titanium oxide compound.
